# EUROPÄISCHE PATENTANMELDUNG

(11) **EP 3 345 474 A1**
(43) Veröffentlichungstag der Anmeldung: **11.07.2018**
(21) Anmeldenummer: 17150418.6
(22) Anmeldetag: 05.01.2017
(51) Int. Cl.: A01D 89/00, F16G 3/00

(54) **RIEMEN ALS ENDLOSES ZUGMITTEL FÜR FÖRDEREINRICHTUNGEN LANDWIRTSCHAFTLICHER MASCHINEN**

(71) Anmelder: Arnold Jäger Holding GmbH, 30625 Hannover (DE)
(72) Erfinder: Jäger, Sebastian, 30657 Hannover (DE); Nick, Schmidt, 31275 Lehrte/Immensen (DE)
(74) Vertreter: Bremer, Ulrich

(57) **Zusammenfassung**

Die vorliegende Erfindung betrifft einen Riemen als endloses Zugmittel für Fördereinrichtungen landwirtschaftlicher Maschinen, wobei der Riemen aus einem durch Gewebelagen verstärkten Polymer besteht und mindestens eine Gewebelage jedes Riemenendes auf sich selbst zurückgeschlagen eine Verdickung umschlingt und derart zwischen der Verdickung und einem ein Widerlager zur Verdickung bildenden Anschlag verläuft, dass sie sich bei in Rückschlagrichtung auf den Riemen wirkenden Zug zwischen der Verdickung und dem Anschlag verklemmt. Aufgabe der Erfindung ist es, einen derartigen Riemen zur Verfügung zu stellen, der eine hohe statische und dynamische Festigkeit sowie eine große Biegeflexibilität in Laufrichtung aufweist und einfach zu montieren ist. Gelöst wird diese Aufgabe dadurch, dass die Verdickung (8) jeweils in einer Kavität (5) einer Schlosshälfte (4.1, 4.2) angeordnet ist, wobei die beiden Schlosshälften (4.1, 4.2) im montierten Zustand auf ihrer einen Seite formschlüssig quer zur Laufrichtung des Riemens (1) zusammengesetzt sind und auf ihrer anderen Seite einen Spalt (6) für den Durchtritt der mindestens einen auf sich selbst zurückgeschlagenen Gewebelage (2) aufweisen, und die Seitenwände (7) der Kavität (5) den Anschlag für die jeweils benachbarte Verdickung (8) mit der dazwischenliegenden mindestens einen Gewebelage (2) bilden.

## Beschreibung

Die vorliegende Erfindung betrifft einen Riemen als endloses Zugmittel für Fördereinrichtungen landwirtschaftlicher Maschinen gemäß dem Oberbegriff des Anspruchs 1.

Derartige Riemen kommen entweder als Einzelriemen in landwirtschaftlichen Maschinen zum Einsatz und sind dann häufig mit Mitnehmern oder dergleichen für zu förderndes Gut versehen, oder sie werden in Förderbändern verbaut, die dann meistens zwei oder mehr parallel zueinander angeordnete derartige Riemen aufweisen, die durch Querelemente, z. B. Stäbe, miteinander verbunden sind. Die Riemen müssen für ihren Einsatz in endloser Form vorliegen. Zur Herstellung einer derartigen endlosen Form sind aus dem Stand der Technik verschiedene Vorgehensweisen bekannt.

In der EP 3 078 880 A1 ist ein gattungsgemäßer Riemen beschrieben. Bei diesem Riemen kann die Verbindungsstelle, bezogen auf die Riemenlängsrichtung, sehr kurz ausgeführt werden, da ihre diesbezügliche Dimensionierung nur von den relativ geringen Querabmessungen der nebeneinander angeordneten beiden Verdickungen und der diesen zugeordneten Anschläge bestimmt ist. Dadurch besitzt der endlos gemachte Riemen an seiner Verbindungsstelle eine große Biegeflexibilität in Laufrichtung, die sich positiv auf das Laufverhalten des Riemens an Umlenkstellen auswirkt. Trotz der kurzen Verbindungsstelle können sehr hohe Zugkräfte übertragen werden, da die mindestens eine Gewebelage, die Verdickung, die sie umschlingt, beim Spannen des Riemens gegen den zugeordneten Anschlag zieht, wodurch die mindestens eine Gewebelage zwischen der Verdickung und dem Anschlag geklemmt wird. Dabei ist die Klemmwirkung auf die Gewebelage desto größer, je höher die auf den Riemen wirkende Zugkraft ist.

Bei einer besonders vorteilhaften Ausführungsform des Riemens sind die Verdickungen in einem Käfig angeordnet, der von einer ersten und einer zweiten Halbschale gebildet ist, wobei die erste Halbschale auf der Außenseite und die zweite Halbschale auf der Innenseite des Riemens angeordnet ist. Der Käfig kann einstückig ausgeführt sein, wobei dann die beiden Halbschalen an einer Stirnseite des Käfigs offen und an der anderen Stirnseite geschlossen sind. Er kann aber auch zweistückig ausgebildet sein, wobei dann die beiden Halbschalen im montierten Zustand durch Verschraubung oder anderweitig so miteinander verbunden sind, dass sie bei Belastung durch Zug auf den Riemen nicht auseinandergedrückt werden können.

Der oben beschriebene, aus dem Stand der Technik bekannte Riemen hat den Vorteil, dass er an der Verbindungsstelle eine hohe statische und dynamische Festigkeit sowie eine große Biegeflexibilität in Laufrichtung aufweist.

Aufgabe der vorliegenden Erfindung ist es, einen gattungsgemäßen Riemen zur Verfügung zu stellen, der bei Beibehaltung der oben genannten positiven Eigenschaften einfach zu montieren ist.

Diese Aufgabe wird erfindungsgemäß mit einem Riemen gelöst, der die Merkmale des Anspruchs 1 aufweist.

Die Montage des Riemens gestaltet sich sehr einfach, da zunächst nur jede Schlosshälfte mit dem jeweils zugeordneten Riemenende verbunden werden muss. Das Endlosmachen des Riemens erfolgt dann anschließend dadurch, dass ein Formschluss zwischen den beiden Schlosshälften hergestellt wird.

Vorteilhafte Ausgestaltungen der Erfindung ergeben sich aus den Unteransprüchen.

Die Erfindung wird nachstehend anhand von Ausführungsbeispielen näher erläutert. In der dazugehörigen Zeichnung zeigt:
- Fig. 1: einen perspektivischen Blick auf eine Verbindungsstelle eines endlos gemachten Riemens gemäß einer ersten Ausführungsform der Erfindung,
- Fig. 2: eine Seitenansicht der Verbindungsstelle gemäß Fig. 1,
- Fig. 3: einen perspektivischen Blick auf eine Verbindungsstelle eines endlos gemachten Riemens gemäß einer zweiten Ausführungsform der Erfindung,
- Fig. 4: eine Seitenansicht der Verbindungsstelle gemäß Fig. 3,
- Fig. 5: einen perspektivischen Blick auf eine Verbindungsstelle eines endlos gemachten Riemens gemäß einer dritten Ausführungsform der Erfindung,
- Fig. 6: eine Seitenansicht der Verbindungsstelle gemäß Fig. 5,
- Fig. 7: einen perspektivischen Blick auf ein modifiziertes Schloss in Scharnierform,
- Fig. 8: einen perspektivischen Blick auf eine Verbindungsstelle eines endlos gemachten Riemens gemäß einer vierten Ausführungsform der Erfindung,
- Fig.9: einen perspektivischen Blick auf eine Verbindungsstelle eines endlos gemachten Riemens gemäß einer fünften Ausführungsform der Erfindung,
- Fig.10: eine Seitenansicht eines bei der Verbindungstelle gemäß Fig. 8 eingesetzten Rundstabes,
- Fig. 11: eine Seitenansicht einer Verbindungsstelle eines endlos gemachten Riemens gemäß einer sechsten Ausführungsform der Erfindung,
- Fig. 12: eine Seitenansicht einer weiteren Ausführungsform eines bei dem Riemen gemäß Fig. 10 eingesetzten Schlosses, und
- Flg.13: eine Seitenansicht einer weiteren Ausführungsform eines bei dem Riemen gemäß Fig. 10 eingesetzten Schlosses.

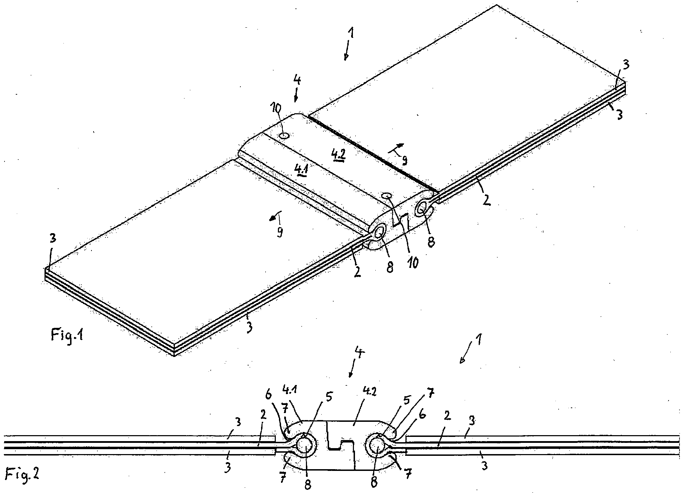

Bei dem in den Fig. 1 und 2 gezeigten Riemen 1 handelt es sich um einen Flachriemen. Er besteht aus einem durch eine Gewebelage 2 verstärkten Polymer, wobei die Gewebelage 2 auf der Außenseite und der Innenseite des Riemens 1 durch eine Polymerschicht 3 abgedeckt ist. Diese Polymerschichten 3 werden zur Schaffung der Verbindungsstelle an beiden Riemenenden entfernt, so dass die Gewebelage 2 hier freiliegt.

Zum Verbinden der beiden Riemenenden ist ein Schloss 4 vorgesehen, welches aus vergütetem Stahl, Stahlguss, Temperguss gefertigt oder aus Pulvermetallen geformt ist. Das Schloss 4 ist quer zur Laufrichtung des Riemens 1 geteilt und besteht somit aus zwei Schlosshälften 4.1 und 4.2. Die beiden Schlosshälften 4.1 und 4.2 sind identisch ausgeführt.

Jede Schlosshälfte 4.1 und 4.2 besitzt im Bereich ihrer im montierten Zustand dem Riemenende zugewandten Seite eine Kavität 5 in Form einer Durchgangsöffnung. Die Kavität 5 öffnet sich in einem Spalt 6 nach außen, der zwischen zwei Seitenwänden 7 der Kavität 5 gebildet ist. Zur Festlegung des Riemenendes in der Schlosshälfte 4.1 bzw. 4.2 wird die Gewebelage 2 unter Bildung einer Schlaufe auf sich selbst zurückgeschlagen und dann seitlich in die Kavität 5 eingeschoben, wobei die auf sich selbst zurückgeschlagene Gewebelage 2 den Spalt 6 wieder nach außen durchtritt. Anschließend wird ein Rundstab 8 aus Stahl in die in der Kavität 5 angeordnete Schlaufe der Gewebelage 2 eingeschoben. Wenn nun auf den Riemen 1 in Rückschlagrichtung (Pfeile 9 in Fig. 1) der Gewebelage 2 Zug ausgeübt wird, werden die Rundstäbe 8 mit der dazwischenliegenden Gewebelage 2 gegen die als Anschläge wirkenden Seitenwände 7 der Kavität 5 gezogen, wodurch die Gewebelage 2 zwischen dem Rundstab 8 und den Seitenwänden 7 der Kavität 5 geklemmt wird. Da der Durchmesser der Rundstäbe 8 zusammen mit der ihn umschlingenden Gewebelage größer ist als die Breite des Spaltes 6, können die die Rundstäbe 8 umschlingenden Gewebelagen 2 nicht aus der Kavität 5 herausgezogen werden.

An ihrer dem Spalt 6 gegenüberliegenden Seite sind die Schlosshälften 4.1 und 4.2 derart konfiguriert, dass sie formschlüssig ineinandergreifen und so das Schloss 4 Zugkräfte in Laufrichtung des Riemens 1 übertragen kann. Um zu verhindern, dass die Schlosshälfte 4.1 und 4.2 im Betrieb voneinander abheben, sind die Schlosshälften 4.1 und 4.2 miteinander verschraubt bzw. vernietet. Dazu sind zwei Durchgangslöcher 10 in den Schlosshälften 4.1 und 4.2 vorgesehen, die den Niet oder die Schraube aufnehmen.

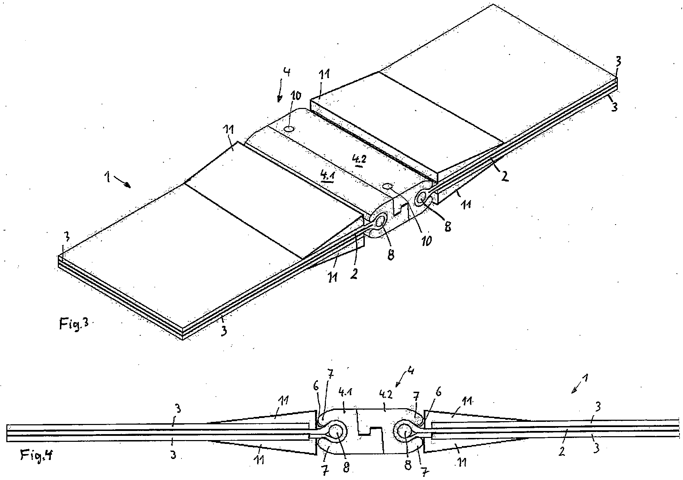

Bei dem in den Fig. 3 und 4 dargestellte Ausführungsbeispiel werden für gleiche oder gleichwirkende Bauteile die Bezugszeichen des vorstehenden Ausführungsbeispiels übernommen. Das gilt auch für die noch folgenden Ausführungsbeispiele.

Das in den Fig. 3 und 4 dargestellte Ausführungsbeispiel unterscheidet sich von dem Vorstehenden lediglich dadurch, dass auf den Riemen 1 benachbart zum Schloss 4 Rampen 11 aus Gummi aufvulkanisiert sind, die zu den Schlosshälften 4.1 und 4.2 hin ansteigen. Damit soll ein sanfter Lauf des Schlosses 4 auf den Rollen einer landwirtschaftlichen Maschine gewährleistet werden.

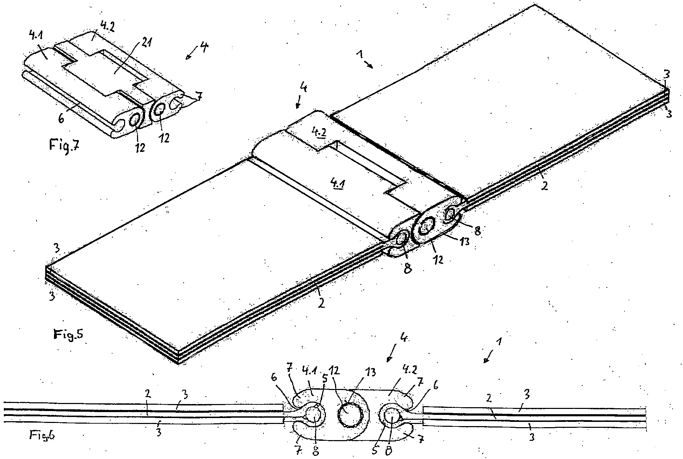

Die Fig. 5 und 6 zeigen ein weiteres Ausführungsbeispiel der vorliegenden Erfindung. Es unterscheidet sich von den beiden oben erläuterten Beispielen dadurch, dass das Schloss 4 nicht aus identischen Schlosshälften 4.1 und 4.2 besteht. Hier sind die Schlosshälften 4.1 und 4.2 als Teile eines Scharnieres ausgeführt, wobei der Formschluss zwischen den Schlosshälften 4.1 und 4.2 dadurch hergestellt wird, dass ein Lagerbolzen 12 durch in den Schlosshälften 14.1 und 14.2 ausgebildete Lageraugen 13 hindurch gesteckt wird. Durch die Ausbildung des Schlosses 4 als Scharnier wird die Biegeflexibilität in Laufrichtung noch erhöht.

Fig. 7 zeigt ein modifiziertes Schloss 4 in Scharnierform. Hier sind die beiden Schlosshälften 4.1 und 4.2 nicht direkt gelenkig miteinander verbunden sondern unter Zwischenfügung eines Zwischengliedes 21. Die Lagerbolzen 12 durchragen hier jeweils zwei Lageraugen 13 jeder Schlosshälfte 4.1 und 4.2 und ein dazwischen fluchtend angeordnetes Lagerauge 13 des Zwischenstücks 21.

In manchen landwirtschaftlichen Maschinen kommen sehr breite Riemen 1 zum Einsatz, so z. B. in Rundballenpressen. In derartigen Maschinen läuft der Riemen über ballige Walzen. Zudem erfährt er Verwindungen. Aus diesem Grunde muss der Riemen 1 auch quer zu seiner Laufrichtung, und zwar auch im Bereich der Verbindungsstelle, biegeflexibel sein.

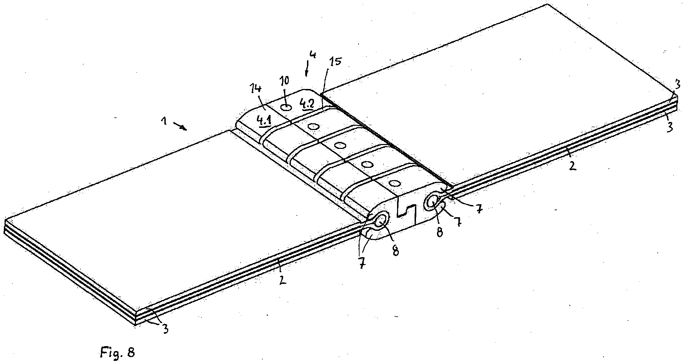

Um diese Flexibilität an der Verbindungsstelle zu erreichen, sind die Schlosshälften 4.1 und 4.2 nicht einstückig ausgebildet, sondern segmentiert, wie in Fig. 8 dargestellt. Zwischen den einzelnen Segmenten 14 bestehen in Laufrichtung des Riemens 1 ausgerichtete Lücken 15, die im Betrieb ein Verkippen der Segmente 14 quer zur Laufrichtung gestatten, so dass die Verbindung auch eine Biegeflexibilität quer zur Laufrichtung des Riemens 1 hat. Ansonsten entspricht die Ausbildung der Verbindungsstelle der der vorstehenden Ausführungsbeispiele, auf die zur Vermeidung von Wiederholungen verwiesen wird.

Bei dem Ausführungsbeispiel gemäß Fig. 8 besteht das Schloss 4 aus einer Vielzahl von Einzelteilen, wodurch die Montage erschwert wird.

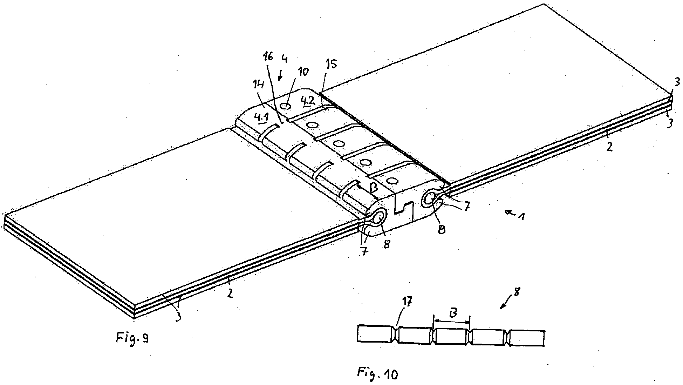

Um die Montage bei Beibehaltung der Segmentierung der Schlosshälften 4.1 und 4.2 zu erleichtern, sind die Schlosshälften 4.1 und 4.2 in einer weiteren Ausführungsform der Erfindung, die in den Fig. 9 und 10 dargestellt ist, durch dünne, die Lücken 15 zwischen den Segmenten 14 überbrückende Stege 16 miteinander verbunden, so dass die Schlosshälften 4.1 und 4.2 einstückig ausgeführt sind. Dadurch ist die Anzahl der bei der Montage zu handhabenden Einzelteile drastisch reduziert. Die Stege 16 zwischen den Segmenten 14 sind als Sollbruchstellen konzipiert. Beim Einsatz des Riemens 1 zerbrechen die Stege 16 zwischen den Segmenten 14 aufgrund der Biegebeanspruchung der Verbindungsstelle, so dass die Segmente 14, wie bei dem vorstehenden Ausführungsbeispiel auch, durchgängig durch Lücken 15 voneinander getrennt sind. Um das Auseinanderbrechen der Segmente 14 nicht zu behindern, sind die Rundstäbe 8 im Abstand der Breite B der Segmente 14 ebenfalls mit Sollbruchstellen 17 versehen, wie in Fig. 10 dargestellt.

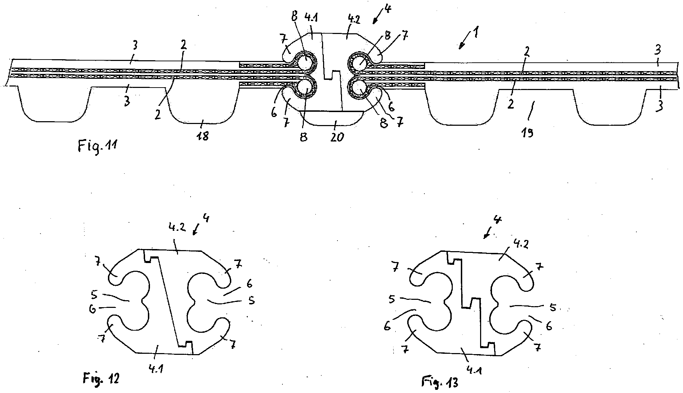

Bei dem Ausführungsbeispiel gemäß Fig. 11 ist der Riemen 1 als Nockenriemen ausgeführt. Auf der Unterseite des Riemens 1 sind Nocken 18 angeordnet, die in einer vorgegebenen Teilung voneinander beabstandet sind. Diese Nocken 18 dienen dem Zwangsantrieb des Riemens 1. Dazu greifen nicht dargestellte Antriebsmittel von Antriebsrädern in Lücken 19 ein, die sich zwischen den Nocken 18 befinden. Derartige Ausführungen sind aus dem Stand der Technik hinlänglich bekannt und müssen daher nicht näher erläutert werden.

Der Riemen 1 weist zur Verstärkung zwei Gewebelagen 2 auf, die auf der Außenseite und der Innenseite des Riemens 1 durch eine Polymerschicht 3 abgedeckt sind. Diese Polymerschichten 3 werden zur Schaffung der Verbindungsstelle an beiden Riemenenden entfernt, so dass die Gewebelagen 2 hier frei liegen.

Das bei diesem Riemen 1 zur Anwendung kommende Schloss 4 entspricht in seinem Aufbau dem Schloss 4 gemäß den Fig. 1 und 2, jedoch mit dem Unterschied, dass seine Kavitäten 5 jeweils zwei Rundstäbe 8 aufnehmen, um die jeweils eine Gewebelage 2 herumgewickelt und auf sich selbst zurückgeschlagen ist.

Der Fig. 11 ist zu entnehmen, dass das Schloss 4 in der Teilung der Nocken 18 liegt. Der auf der Unterseite des Riemens 1 liegende Bereich des Schlosses 4 kann daher die Funktion eines Nockens 18 übernehmen. Zum Angleich an die Form eines Nockens 18 ist auf die Unterseite des Schlosses 4 eine Kappe 20 aus Gummi aufvulkanisiert. Dadurch wird gleichzeitig ein Metall-auf-Metall-Kontakt an den Antriebsrädern vermieden.

In den Fig. 12 und 13 sind Schlösser 4 dargestellt, die sich, abgesehen von der fehlenden Gummikappe 20, von dem gemäß Fig. 11 dadurch unterscheiden, dass sie andere Formschlusskonfigurationen aufweisen.

Die Verdickungen 8 können auch als Gewindebolzen ausgeführt werden, die bei der Montage in die umschlingende Gewebelage 2 gewissermaßen selbstschneidend eingedreht werden.

## Patentansprüche

1. Riemen als endloses Zugmittel für Fördereinrichtungen landwirtschaftlicher Maschinen, wobei der Riemen aus einem durch Gewebelagen verstärkten Polymer besteht und mindestens eine Gewebelage jedes Riemenendes auf sich selbst zurückgeschlagen eine Verdickung umschlingt und derart zwischen der Verdickung und einem ein Widerlager zur Verdickung bildenden Anschlag verläuft, dass sie sich bei in Rückschlagrichtung auf den Riemen wirkenden Zug zwischen der Verdickung und dem Anschlag verklemmt, **dadurch gekennzeichnet, dass** die Verdickung (8) jeweils in einer Kavität (5) einer Schlosshälfte (4.1, 4.2) angeordnet ist, wobei die beiden Schlosshälften (4.1, 4.2) im montierten Zustand auf ihrer einen Seite formschlüssig quer zur Laufrichtung des Riemens (1) zusammengesetzt sind und auf ihrer anderen Seite einen Spalt (6) für den Durchtritt der mindestens einen auf sich selbst zurückgeschlagenen Gewebelage (2) aufweisen, und die Seitenwände (7) der Kavität (5) den Anschlag für die jeweils benachbarte Verdickung (8) mit der dazwischenliegenden mindestens einen Gewebelage (2) bilden.

2. Riemen nach Anspruch 1, **dadurch gekennzeichnet, dass** die Schlosshälften (4.1, 4.2) über die Breite des Riemens (1) aus Segmenten (14) bestehen, die durch in Laufrichtung des Riemens (1) ausgerichtete Lücken (15) voneinander getrennt sind.

3. Riemen nach Anspruch 1, **dadurch gekennzeichnet, dass** die Schlosshälften (4.1, 4.2) über die Breite des Riemens (1) aus Segmenten (14) bestehen, die durch in Laufrichtung des Riemens (1) ausgerichtete Lücken (15) voneinander getrennt sind, wobei die Segmente (14) vor einem Ersteinsatz des Riemens (1) durch Sollbruchstellen bildende, die Lücken (15) überbrückende Stege (16) miteinander verbunden sind, um im Einsatz des Riemens (1) gezielt Ermüdungsbrüche der Stege (16) zu erzwingen.

4. Riemen nach Anspruch 3, **dadurch gekennzeichnet, dass** die Verdickungen als Rundstäbe (8) ausgeführt sind, die in Segmentbreite (B) Sollbruchstellen bildende Einkerbungen (17) aufweisen, um im Einsatz des Riemens (1) gezielt Ermüdungsbrüche der Einkerbungen (17) zu erzwingen.

5. Riemen nach einem der vorstehenden Ansprüche1 bis 3,**dadurch gekennzeichnet, dass** die Verdickungen (8) als Schrauben ausgeführt sind, die in die umschlingende Gewebelage (2) eingedreht sind.

6. Riemen nach einem der vorstehenden Ansprüche, **dadurch gekennzeichnet, dass** auf den Riemen (1) benachbart zum Schloss (4) Rampen (11) aus Gummi aufvulkanisiert sind, die zu den Schlosshälften (4.1) und (4.2) hin ansteigen.

7. Riemen nach Anspruch 1 oder 6, **dadurch gekennzeichnet, dass** die Schlosshälften (4.1) und (4.2) als Teile eines Scharniers ausgeführt sind, wobei der Formschluss zwischen ihnen durch Lagerbolzen (12) hergestellt ist, die durch in den Schlosshälften (4.1) und (4.2) ausgebildete Lageraugen (13) hindurch gesteckt sind.

8. Riemen nach Anspruch 7, **dadurch gekennzeichnet, dass** die Schlosshälften (4.1) und (4.2) durch ein Zwischenglied (21) indirekt gelenkig miteinander verbunden sind.
